Europäisches Patentamt

European Patent Office

Office européen des brevets

(19)

(11) Numéro de publication: **0 066 026**
**A1**

(12) # DEMANDE DE BREVET EUROPEEN

(21) Numéro de dépôt: **81400832.2**

(22) Date de dépôt: **25.05.81**

(51) Int. Cl.³: **B 01 D 1/26**
**A 23 C 1/12**

(43) Date de publication de la demande:
**08.12.82 Bulletin 82/49**

(84) Etats contractants désignés:
**AT BE CH DE GB IT LI NL SE**

(71) Demandeur: **LAGUILHARRE S.A.**
**2, avenue du 18 Juin 1940**
**F-92500 Rueil Malmaison(FR)**

(72) Inventeur: **Ciboit, Jacques Jean**
**164 Bis, rue de L'Université**
**F-75007 Paris(FR)**

(74) Mandataire: **Kedinger, Jean-Paul et al,**
**c/o Cabinet Malemont 42, avenue du Président Wilson**
**F-75116 Paris(FR)**

(54) **Procédé de concentration d'un produit froid et de préchauffage d'un fluide en circulation et installation pour sa mise en oeuvre.**

(57) Installation pour réaliser la concentration d'un produit froid comprenant un évaporateur multiple effet (1 à 6) recevant le produit à concentrer, dont le corps de chauffe (20, 22, 23) d'au moins un effet (2, 3, 4) est muni d'une conduite de prélèvement (37, 38, 39) de condensats et/ou de vapeur, cette conduite ou ces conduites préalablement rassemblées en une conduite unique (40) se prolongeant à travers un premier échangeur de chaleur indirect (41) comportant un circuit de fluide froid à préchauffer (42, 43), puis à travers un second échangeur de chaleur indirect (44) comportant un circuit de produit froid (45, 46) à traiter dans l'évaporateur.

Intéresse notamment l'industrie laitière.

Fig.1

EP 0 066 026 A1

La présente invention a pour objet un procédé de concentration d'un produit froid, tel qu'un produit laitier froid, et de préchauffage d'un fluide en circulation, qui consiste à soumettre ledit produit froid à des évaporations successives, la vapeur produite au cours de chaque évaporation étant utilisée pour créer l'évaporation suivante, et à utiliser de la vapeur et/ou des condensats produits au cours d'au moins l'une des évaporations successives pour préchauffer en un stade ledit fluide. Elle concerne également une installation pour la mise en oeuvre de ce procédé.

Pour préchauffer un fluide froid, il est en effet particulièrement avantageux d'utiliser des calories, sous forme de vapeur et/ou de condensats, prélevées à un niveau quelconque de cette évaporation, puisque ces calories qui ont déjà servi à évaporer sont économiques. Du fait de ce prélèvement de calories, il est nécessaire, pour conserver la même concentration finale du produit, d'apporter davantage de vapeur au premier stade d'évaporation, mais il ne demeure pas moins vrai que la quantité de calories disponibles après la dernière évaporation peut être insuffisante pour préchauffer le produit froid à concentrer, ce qui a généralement un effet désastreux sur les opérations d'évaporation. Alors, on a eu recours, pour réaliser ce préchauffage, à de la vapeur extérieure peu économique, ce qui bien évidemment augmente fortement le coût de fonctionnement de l'installation mettant en oeuvre le procédé du type ci-dessus.

La présente invention se propose de remédier à ces inconvénients et pour ce faire, elle a pour objet un procédé qui se caractérise en ce que tout ou partie des condensats obtenus après utilisation de la vapeur et/ou des condensats pour préchauffer le fluide, éventuellement mélangés à tout ou partie des condensats provenant des évaporations successives et à tout ou partie des buées condensées provenant de la dernière évaporation, sont mis en oeuvre pour réchauffer le produit froid devant subir les évaporations successives.

En opérant ainsi, on cède au produit froid des calories particulièrement économiques puisqu'elles ont déjà servi à évaporer, et on comprendra l'économie substantielle qu'il est possible de réaliser dans ces conditions.

Tout ou partie de la vapeur nécessaire pour créer la première évaporation peut être produite par thermocompression de tout ou partie de la vapeur créée au cours de l'une quelconque des évaporations successives.

Une partie de la vapeur nécessaire pour créer la première évaporation peut par ailleurs être obtenue par recompression mécanique de tout ou partie de la vapeur créée par l'une quelconque des évaporations. Dans ce cas, la présente invention est particulièrement intéressante puisque du fait de cette recompression mécanique la quantité de vapeur et donc de calories disponibles après la dernière évaporation est encore plus faible.

Selon une variante, le produit à concentrer est soumis à une pasteurisation avant évaporation, et dans ces conditions, il est avantageux d'utiliser le produit ainsi pasteurisé pour chauffer les condensats destinés à préchauffer en un stade ledit fluide.

Selon une autre caractéristique de l'invention, la vapeur et/ou les condensats destinés à préchauffer en un stade ledit fluide sont préalablement réchauffés à l'aide de vapeur produite par thermocompression de tout ou partie de la vapeur créée au cours de l'une quelconque des évaporations successives.

Il est à remarquer que le fluide à préchauffer peut être de l'air destiné à être utilisé dans un sécheur où est traité le produit concentré ayant subi les évaporations successives ou tout autre concentré disponible, le sécheur étant par exemple du type par atomisation.

L'installation utilisée pour la mise en oeuvre du procédé tel que défini ci-dessus, se caractérise notamment en ce qu'elle comprend un évaporateur multiple effet recevant le produit à concentrer, dont le corps de chauffe d'au moins un effet est muni d'une conduite de prélèvement de condensats et/ou de vapeur, cette conduite ou ces conduites préalablement rassemblées en une conduite unique, se prolongeant à travers un premier échangeur de chaleur indirect comportant un circuit de fluide froid à préchauffer, puis à travers un second échangeur de chaleur indirect comportant un circuit de produit froid à traiter dans l'évaporateur, qui se trouve ainsi réchauffé.

Il est à noter que le corps de chauffe du dernier effet est muni à sa base d'une conduite de prélèvement de condensats reliée directement ou par l'intermédiaire d'un bac de stockage. et en amont du second échangeur, en un ou plusieurs points d'au moins l'une des conduites véhiculant des condensats et/ou de la vapeur prélevés sur l'évaporateur. Ces condensats peuvent ainsi soit contribuer au réchauffage du produit froid entrant, soit être utilisés comme source d'eau chaude.

Selon une variante, la conduite de prélèvement de condensats et/ou de vapeur ou les conduites de prélèvement de condensats et/ou de vapeur rassemblées en une conduite unique, se prolongent à travers un échangeur de chaleur indirect comportant un circuit de fluide froid à préchauffer, avant de s'en retourner déboucher dans le corps de chauffe d'un effet de l'évaporateur, le corps de chauffe du dernier effet étant muni à sa base d'une conduite de prélèvement de condensats reliée directement ou par l'intermédiaire d'un bac de stockage à un échangeur de chaleur indirect comportant un circuit de produit froid à traiter dans l'évaporateur et qui se trouve ainsi réchauffé.

Enfin, ces installations peuvent comporter une conduite assurant 1 cheminement des buées condensées du dernier effet, cette conduite étant raccordée à la conduite de prélèvement de condensats ou au bac de stockage.

Plusieurs modes de réalisation de la présente invention sont représentés à titre d'exemples sur le dessin annexé dans lequel les différentes figures sont la représentation schématique d'une installation selon l'invention :

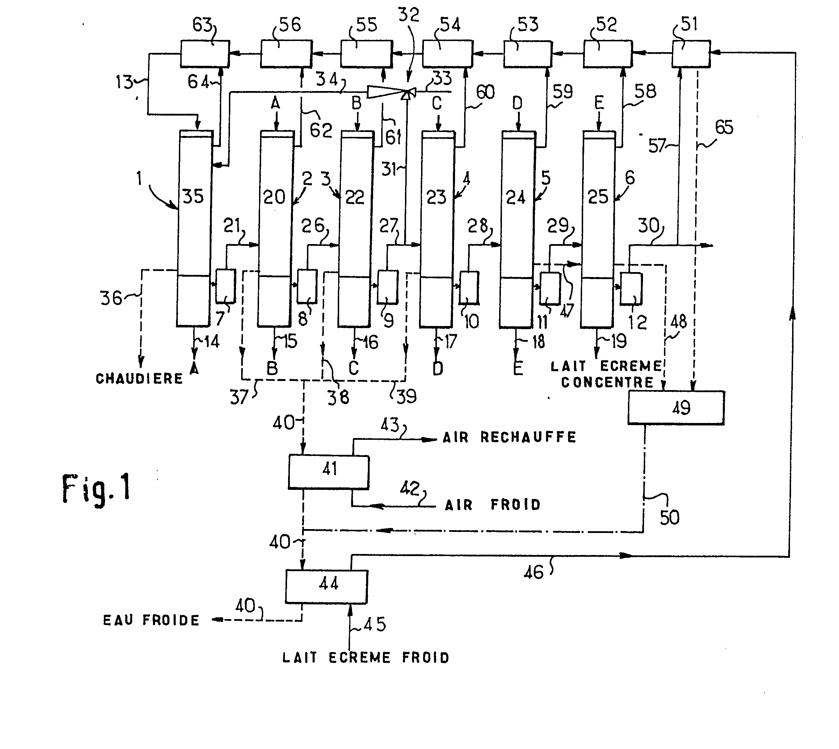

- l'installation de la figure 1 comportant un évaporateur sextuple effet, un prélèvement de condensats ayant lieu sur les 2ème, 3ème et 4ème effets,

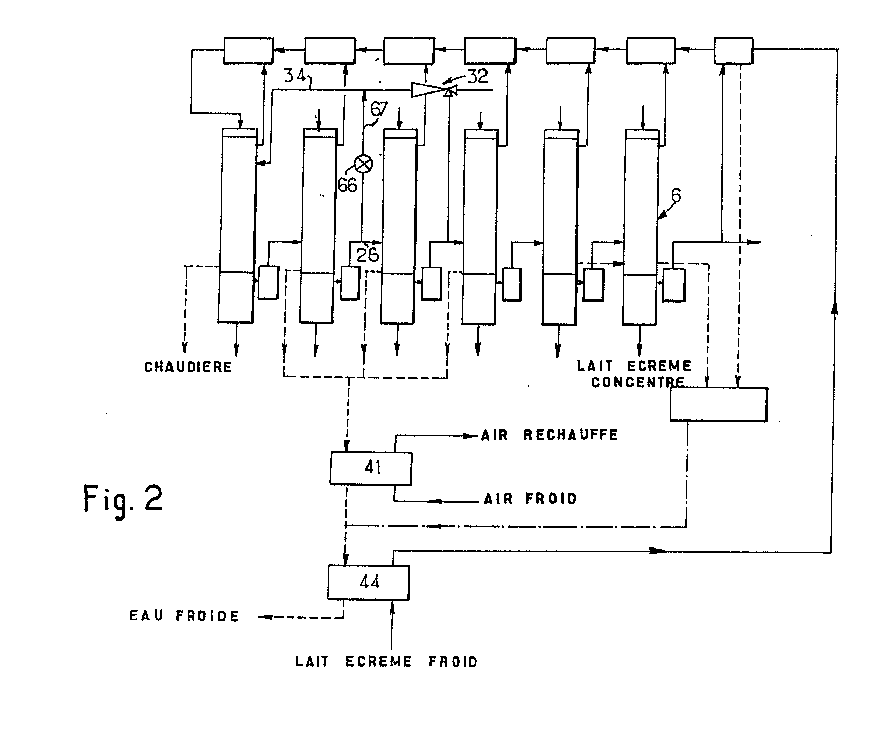

- l'installation de la figure 2 étant celle de la figure 1, mais comportant un thermocompresseur de vapeur associé à un recompresseur mécanique de vapeur,

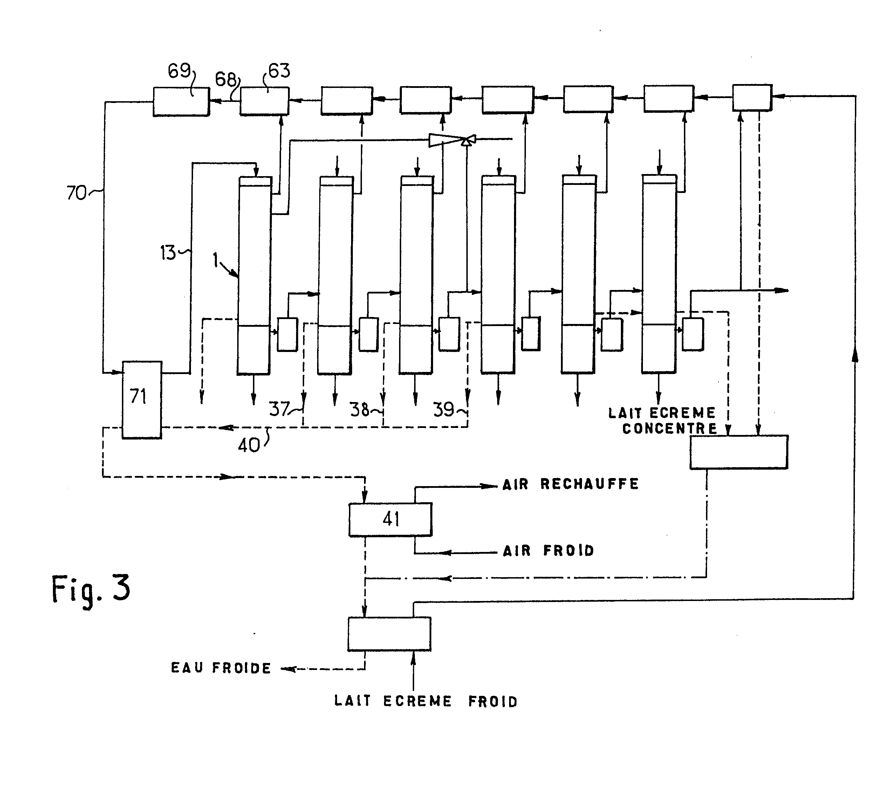

- l'installation de la figure 3 étant celle de la figure 1, mais comportant un pasteurisateur,

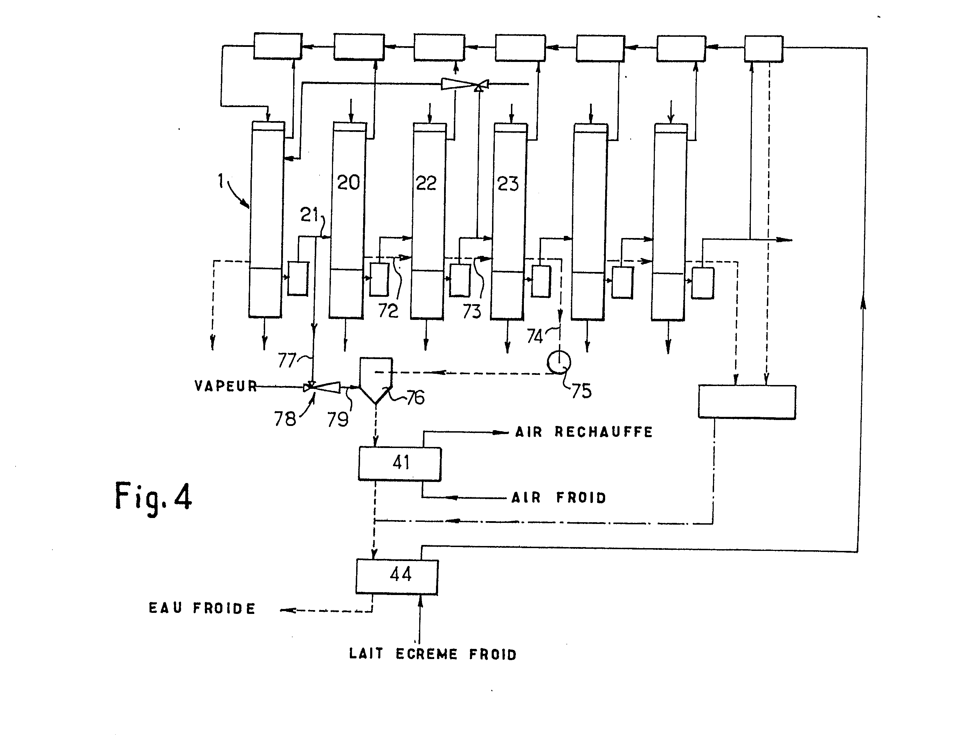

- l'installation de la figure 4 comportant un évaporateur sextuple effet et un prélèvement de condensats ayant lieu sur le 4ème effet, ces concensats étant préchauffés avant utilisation pour réchauffer un fluide en circulation, et

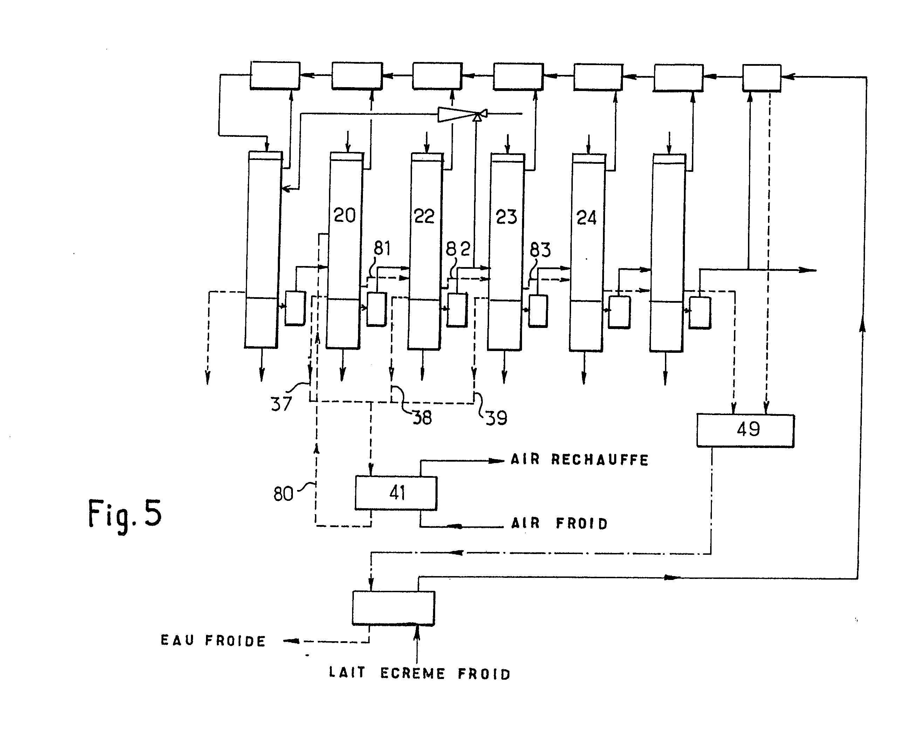

- l'installation de la figure 5 étant celle de la figure 1, mais les condensats étant ramenés dans le 2ème effet après avoir servi à préchauffer un fluide.

L'installation de la figure 1 comporte un évaporateur à six effets 1 à 6 maintenus à des pressions croissantes du premier au dernier et auxquels sont respectivement associés les séparateurs vapeur-liquide 7 à 12. Le produit à concentrer qui est du lait écrémé, est introduit par la conduite 13 au sommet du premier effet 1, puis ramené de la base de cet effet en tête A du deuxième effet 2 par une conduite 14, et d'effet en effet de la même manière respectivement par les conduites 15 à 18. A la base du dernier effet 6 est extrait par une conduite 19 le lait écrémé concentré. La vapeur créée par évaporation du lait écrémé dans l'effet 1, est amenée après passage dans le séparateur vapeur-liquide 7 dans le corps de chauffe 20 de l'effet 2 par une conduite 21, et ainsi de suite la vapeur créée dans les effets 2, 3, 4 et 5 étant amenée, après passage dans les séparateurs vapeur-liquide 8, 9, 10 et 11, respectivement dans les corps de chauffe 22, 23, 24 et 25 par les conduites 26, 27, 28 et 29. La vapeur créée dans l'effet 6 est, quant à elle, dirigée après passage dans le séparateur 12, vers une source de vide (non représentée) par une conduite 30.

La conduite 27 porte en dérivation le conduit d'aspiration 31 d'un thermocompresseur de vapeur 32 alimenté par de la vapeur vive par un conduit 33, et une partie de la vapeur circulant dans ladite conduite 27 est ainsi prélevée pour être refoulée par le conduit de refoulement 34 dudit thermocompresseur, vers le corps de chauffe 35 de l'effet 1.

Bien entendu, l'évaporateur pourrait comporter plus ou moins de 6 effets, et le thermocompresseur pourrait prélever la vapeur d'évaporation issue de l'un quelconque des effets, sans que cela ne modifie en rien la présente invention.

Les condensats qui se forment dans le corps de chauffe 35 sont soutirés par une conduite 36 et dirigés en tout ou partie vers une chaudière (non représentée) où est produite la vapeur nécessaire au fonctionnement du thermocompresseur 32.

Les condensats produits dans les corps de chauffe 20, 22 et 23 sont prélevés respectivement par des conduites 37, 38 et 39 qui sont raccordées pour former une conduite unique 40 qui traverse d'abord un premier échangeur de chaleur indirect 41 où ils réchauffent de l'air froid entrant dans ce dernier par une tubulure 42 et en sortant par une tubulure 43, puis un second échangeur de chaleur indirect 44 où ils réchauffent le lait écrémé froid à traiter dans l'évaporateur, ce lait froid entrant dans l'échangeur 44 par une tubulure 45 et en sortant par une tubulure 46.

Par ailleurs, les condensats du corps de chauffe 24 sont dirigés vers le corps de chauffe 25 par une conduite 47 et les condensats du corps de chauffe 25 sont soutirés par une conduite 48 et amenés dans un bac de stockage 49. Les condensats ainsi rassemblés dans ce bac peuvent alors soit servir d'eau chaude dont les usages sont multiples, soit être réunis en tout ou partie aux condensats issus de l'échangeur 41, par mise en oeuvre d'une conduite 50 raccordée à la conduite 40 sur le tronçon existant entre les deux échangeurs 41 et 44.

Il est bien certain qu'il aurait été possible de prélever des condensats ou de la vapeur sur plus ou moins de trois effets et sur un ou des effets autres que les effets 2, 3 et 4 sans que cela ne modifie en rien le principe de l'invention.

La tubulure 46 traverse ensuite une batterie d'échangeurs de chaleur indirect 51 à 56 respectivement alimentés en vapeur créée dans les effets 6 à 1, par les conduits 58 à 62. Le lait écrémé issu de l'échangeur 56 traverse enfin un échangeur de chaleur indirect 63 alimenté par une conduite 64 en vapeur issue du corps de chauffe 35, avant d'être dirigé par la conduite 13 en tête de l'effet 1, où il arrive suffisamment réchauffé pour que l'évaporation s'effectue sans problème. Les condensats créés dans l'échangeur 51 sont pour leur part amenés par une conduite 65 dans le bac 49 où ils se mélangent aux condensats issu du dernier effet et peuvent donc apporter leur contribution au réchauffage du lait écrémé dans l'échangeur 44.

Il est à noter que la température des condensats issus de l'échangeur 44 et qui ont cédé leurs calories au lait écrémé, atteint généralement une valeur suffisamment basse pour qu'ils puissent être utilisés ensuite comme source de froid, pour autant que le lait écrémé entrant dans cet échangeur 44 soit lui-même à basse température.

L'installation de la figure 2 est en tous points identique à celle de la figure 1, si ce n'est que la conduite 26 porte en dérivation le conduit d'aspiration d'un recompresseur mécanique de vapeur 66 dont le conduit de refoulement 67 est relié au conduit de refoulement 34 du thermocompresseur 32. Du fait de la présence de ce recompresseur, on a besoin d'injecter moins de vapeur au niveau du thermocompresseur 32, d'où il résulte que la quantité de vapeur disponible à la sortie de l'effet 6 est plus faible que dans l'installation de la figure 1. L'utilisation des calories des condensats issus de l'échangeur 41 pour le préchauffage du lait écrémé froid dans l'échangeur 44 est donc particulièrement intéressante.

L'installation de la figure 3 diffère de l'installation de la figure 1 :

. en ce que le lait écrémé préchauffé issu de l'échangeur 63 est introduit par une conduite 68 dans un pasteurisateur 69 puis est amené par une conduite 70 dans un échangeur 71 avant d'être dirigé par la conduite 13 en tête de l'effet 1, et

. en ce que les condensats issus des conduits 37, 38 et 39 et rassemblés dans la conduite 40 sont préalablement réchauffés dans ledit échangeur 71 avant d'être introduits dans l'échangeur 41.

Il est possible ainsi de récupérer avantageusement les calories mises en oeuvre pour la pasteurisation, calories qui servent à réchauffer l'air à plus forte température, et à préchauffer le lait écrémé froid.

L'installation de la figure 4 diffère de celle de la figure 1 par les modifications suivantes. Les condensats du corps de chauffe 20 sont amenés dans le corps de chauffe 22 par une tubulure 72, les condensats du corps de chauffe 22 sont amenés dans le corps de chauffe 23 par une tubulure 73 et les condensats du corps de chauffe 23 sont soutirés de ce dernier par une tubulure 74 et une pompe 75 et dirigés dans un réchauffeur 76. Par ailleurs, la conduite 21 porte en dérivation le conduit d'aspiration 77 d'un thermocompresseur 78 dont le conduit de refoulement 79 débouche dans ledit réchauffeur 76. La fraction de vapeur prélevée sur la conduite 21 et soumise à une thermocompression est ainsi utilisée pour réchauffer les condensats arrivant dans le réchauffeur 76. Les condensats réchauffés traversent ensuite, comme dans la figure 1, successivement l'échangeur 41, puis l'échangeur 44.

L'installation de la figure 5 quant à elle diffère de celle de la figure 1 en ce que les condensats sortant de l'échangeur 41 sont ramenés par une conduite 80 dans le corps de chauffe 20. Les condensats présents respectivement dans les corps de chauffe 20, 22 et 23 et non prélevés par les conduites 37, 38 et 39 sont dirigés respectivement par des conduites 81, 82 et 83 dans le corps de chauffe de l'effet qui suit celui dont ils sont prélevés. Dans ce cas, le lait écrémé froid sera préchauffé par mise en oeuvre de tout ou partie des condensats disponibles dans le bac 49.

Dans les installations objet des figures 1 à 5, les calories pré levées sur l'évaporateur servent à réchauffer de l'air froid, mais cet air froid peut être remplacé par n'importe quel fluide que l'on désire préchauffer. L'air ou le fluide ainsi réchauffé a différentes applications, par exemple, lorsque le fluide en question est de l'air, ce dernier peut être utilisé après un réchauffage plus poussé, dans un sécheur, par exemple du type par atomisation, sécheur dans lequel peut être traité le lait écrémé concentré issu de l'effet 6 ou tout autre concentré disponible.

Par ailleurs, il y a lieu de noter que dans les installations objet des figures 1 à 5 décrites ci-dessus, la canalisation 50 n'est pas nécessairement reliée à la conduite 40 sur le tronçon existant entre les deux échangeurs 41 et 44, mais peut être raccordée à ce tronçon et/ou à la conduite 40 se trouvant en amont de l'échangeur 41.

En outre, l'échangeur de chaleur 41 peut être constitué par plusieurs échangeurs plus petits disposés en série, auquel cas la canalisation 50 peut également être raccordée à la canalisation 40 sur un tronçon au moins, existant entre ces différents échangeurs.

REVENDICATIONS

1. Procédé de concentration d'un produit froid, tel qu'un produit laitier froid, et de préchauffage d'un fluide en circulation, qui consiste à soumettre ledit produit froid à des évaporations successives, la vapeur produite au cours de chaque évaporation étant utilisée pour créer l'évaporation suivante, et à utiliser de la vapeur et/ou des condensats produits au cours d'au moins l'une des évaporations successives pour préchauffer en un stade ledit fluide, caractérisé en ce que tout ou partie des condensats obtenus après utilisation de la vapeur et/ou des condensats pour préchauffer le fluide, éventuellement mélangés à tout ou partie des condensats provenant des évaporations successives et à tout ou partie des buées condensées provenant de la dernière évaporation, sont mis en oeuvre pour réchauffer le produit froid devant subir les évaporations successives.

2. Procédé selon la revendication 1, caractérisé en ce que tout ou partie de la vapeur nécessaire pour créer la première évaporation est produite par thermocompression de tout ou partie de la vapeur créée au cours de l'une quelconque des évaporations successives.

3. Procédé selon la revendication 2, caractérisé en ce qu'une partie de la vapeur nécessaire pour créer la première évaporation est produite par recompression mécanique de tout ou partie de la vapeur créée par l'une quelconque des évaporations.

4. Procédé selon l'une quelconque des revendications précédentes, caractérisé en ce que le produit à concentrer est soumis à une pasteurisation avant évaporation.

5. Procédé selon la revendication 4, caractérisé en ce que le produit pasteurisé est utilisé, avant évaporation, pour chauffer la vapeur et/ou les condensats destinés à préchauffer en un stade ledit fluide.

6. Procédé selon l'une quelconque des revendications précédentes, caractérisé en ce que lesdits condensats destinés à préchauffer en un stade ledit fluide sont préalablement réchauffés à l'aide de vapeur produite par thermocompression de tout ou partie de la vapeur créée au cours de l'une quelconque des évaporations successives.

7. Procédé selon l'une quelconque des revendications précédentes, caractérisé en ce que le fluide à préchauffer est de l'air destiné à être utilisé dans un sécheur où est traité le produit concentré ayant subi les évaporations successives ou tout autre concentré disponible.

8. Installation pour la mise en oeuvre du procédé selon l'une quelconque des revendications précédentes, caractérisée en ce qu'elle comprend un évaporateur multiple effet (1 à 6) recevant le produit à concentrer, dont le corps de chauffe (20, 22, 23) d'au moins un effet (2, 3, 4) est muni d'une conduite de prélèvement (37, 38, 39) de condensats et/ou de vapeur, cette conduite ou ces conduites préalablement rassemblées en une conduite unique (40), se prolongeant à travers un premier échangeur de chaleur indirect (41) comportant un circuit de fluide froid à préchauffer (42, 43), puis à travers un second échanteur de chaleur indirect (44) comportant un circuit de produit froid (45, 46) à traiter dans l'évaporateur.

9. Installation selon la revendication 8, caractérisée en ce que le corps de chauffe (25) du dernier effet (6) est muni à sa base d'une conduite de prélèvement de condensats (48) reliée directement ou par l'intermédiaire d'un bac de stockage (49), et en amont du second échangeur (44), en un ou plusieurs points d'au moins l'une des conduites (40) véhiculant des condensats et/ou de la vapeur prélevés sur l'évaporateur.

10. Installation selon l'une quelconque des revendications 1 à 7, caractérisée en ce qu'elle comprend essentiellement un évaporateur multiple effet (1 à 6) recevant le produit à concentrer, dont le corps de chauffe (20, 22, 23) d'au moins un effet (2, 3, 4) est muni d'une conduite de prélèvement (37, 38, 39) de condensats et/ou de vapeur, cette conduite ou ces conduites se prolongeant à travers un échangeur de chaleur indirect (41) comportant un circuit de fluide à froid (42, 43) à préchauffer, avant de s'en retourner déboucher dans le corps de chauffe (20) d'un effet (2) de l'évaporateur, le corps de chauffe (25) du dernier effet (6) étant muni à sa base d'une conduite de prélèvement (48) de condensats reliée directement ou par l'intermédiaire d'un bac de stockage (49) à un échangeur de chaleur indirect (44) comportant un circuit de produit froid (45, 46) à traiter dans l'évaporateur, et qui se trouve ainsi réchauffé.

11. Installation selon la revendication 9 ou 10, caractérisée en ce qu'une conduite (65) assurant le cheminement des buées condensées du dernier effet (6) est raccordée à ladite conduite de prélèvement (48) de condensats ou audit bac de stockage (49).

Fig.1

CHAUDIERE

AIR RECHAUFFE

AIR FROID

LAIT ECREME
CONCENTRE

EAU FROIDE

LAIT ECREME FROID

1/5

0066026

Fig. 2

CHAUDIERE

LAIT ECREME
CONCENTRE

AIR RECHAUFFE

41

AIR FROID

44

EAU FROIDE

LAIT ECREME FROID

Fig. 3

LAIT ECREME CONCENTRE

AIR RECHAUFFE

AIR FROID

EAU FROIDE

LAIT ECREME FROID

3/5

0066026

Fig. 4

AIR RECHAUFFE

AIR FROID

LAIT ECREME FROID

VAPEUR

EAU FROIDE

Fig. 5

AIR RECHAUFFE

AIR FROID

EAU FROIDE

LAIT ECREME FROID

5/5

0066026

0066026

| Catégorie | DOCUMENTS CONSIDERES COMME PERTINENTS | | CLASSEMENT DE LA DEMANDE (Int. Cl. ³) |
|---|---|---|---|
| | Citation du document avec indication, en cas de besoin, des parties pertinentes | Revendica-tion concernée | B 01 D 1/26 |
| X | DE - B - 1 015 763 (S.E.G. JANS-SON) | | A 23 C 1/12 |
| | * colonne 2, ligne 53 - colonne 3, ligne 67; figure * | 1,2,8 | |
| | -- | | |
| | DE - B - 1 142 162 (BASF) | | |
| | * colonne 3, lignes 34-68; colonne 4, lignes 9-24; figure * | 1,8,9 | |
| | -- | | DOMAINES TECHNIQUES RECHERCHES (Int. Cl. ³) |
| | CH - A - 411 955 (GENERAL ELECTRIC COMP.) | | B 01 D 1/26 1/28 A 23 C 1/12 |
| | * page 4, lignes 10-120; figure 7 * | 1,2 | |
| | -- | | |
| | EP - A - 0 034 920 (DU PONT DE NEMOURS) | | |
| | * page 7, ligne 10 - page 10, ligne 23; figures 1,2 * | 1,2 | |
| | -- | | |
| | GB - A - 2 057 278 (LAGUILHARRE) | | CATEGORIE DES DOCUMENTS CITES |
| | * page 1, lignes 30-41, 61-70; 112 - page 2, ligne 45; page 3, lignes 7-61; figures 1,5 * | 2,6,7, 8 | X: particulièrement pertinent à lui seul<br>Y: particulièrement pertinent en combinaison avec un autre document de la même catégorie<br>A: arrière-plan technologique·<br>O: divulgation non-écrite<br>P: document intercalaire<br>T: théorie ou principe à la base de l'invention<br>E: document de brevet antérieur, mais publié à la date de dépôt ou après cette date<br>D: cité dans la demande<br>L: cité pour d'autres raisons |
| | -- | | |
| A | FR - A - 1 482 000 (LAGUILHARRE) | | |
| | * page 2, figure * | 1 | |
| | -- ./. | | &: membre de la même famille, document correspondant |

Le présent rapport de recherche a été établi pour toutes les revendications

| Lieu de la recherche | Date d'achèvement de la recherche | Examinateur |
|---|---|---|
| La Haye | 20-01-1982 | VAN BELLEGHEM |

OEB Form 1503.1  06.78

Office européen
des brevets

| Catégorie | Citation du document avec indication, en cas de besoin, des parties pertinentes | Revendication concernée |
|---|---|---|
| **DOCUMENTS CONSIDERES COMME PERTINENTS** | | |
| A | BE - A - 880 441 (WIEGAND) <br><br> * page 4, lignes 18-29; page 6, lignes 1-20; figures 2,4 * <br><br> -- | 7,10 |
| A | FR - A - 1 361 793 (SOC. DES PRODUITS NESTLE) <br><br> * page 3, lignes 5-7 * <br><br> -- | 4 |
| A | LU - A - 79 982 (LAGUILHARRE) <br><br> * page 3, ligne 33 - page 4, ligne 20; page 5, lignes 11-21; page 6, lignes 12-16, 26-27; figures 1,4 * <br><br> -- | 2,3,7 |
| A | FR - A - 2 435 676 (LAGUILHARRE) | |
| A | US - A - 3 961 658 (G. PAGANI) | |
| A | US - A - 3 288 685 (C.A. KEMPER) | |
| A | US - A - 2 631 105 (R.O. HENSZEY) | |
| A | DE - A - 2 538 472 (DRAVO CORP.) <br><br> ----- | |

CLASSEMENT DE LA DEMANDE (Int. Cl. 3)

DOMAINES TECHNIQUES RECHERCHES (Int. Cl. 3)